# EUROPEAN PATENT APPLICATION

(11) **EP 2 662 119 A2**
(43) Date of publication of application: **13.11.2013**
(21) Application number: 13002399.7
(22) Date of filing: 06.05.2013
(51) Int. Cl.: A63B 6/00, A63B 26/00

(54) **A mat with perimetric tray structure for gymnastics and physical rehabilitation with at least a repositionable step and an insert also removable**

(30) Priority: 09.05.2012 IT TV20120078
(71) Applicant: Scian, Daniela, 33084 Cordenons (PN) (IT)
(72) Inventor: Fantin, Alessandro, 33084 Cordenons (PN) (IT)
(74) Representative: Osti, Biancamaria

(57) **Abstract**

Mat for gymnastics and physical rehabilitation and re-education, apt to perform appropriate treatment in order to strengthen and re-educate the muscle and tendon structure of the human body. The mat is made from a tray delimited by a perimetric frame of polyethylene containing at least one layer of viscoelastic or memory, glued on underlying layers of polyethylene and polyurethane glued together, always contained inside the said tray, and at least one step removable and repositionable firmly on the mat, and at least one insert also removable and repositionable firmly into the carpet. The perimetric frame of density higher than of the layers of the material contained, allows the feet resting astride the perimetric frame, a flexion movement, extension of the tibiotarsal articulation along its transverse axis, exerting a pressure massage due to the body weight standing upright on the foot plant, at vascular vesicles level, obtaining a venous return increase.

## Description

The present invention relates to a mat with perimetric tray structure for gymnastics and physical rehabilitation, apt to perform an appropriate treatment in order to strengthen and rehabilitate the muscle and tendineous structure of the human body. The mat is made from a tray delimited by a perimetric frame of polyethylene containing at least one layer of viscoelastic or memory, glued on underlying layers of polyethylene and polyurethane glued together, always contained inside of the tray, and at least one step removable and repositionable firmly on the mat, and at least one insert also removable and repositionable firmly into the mat. The perimetric frame of higher density than of the layers of the material contained, allows the feet resting astride the perimetric frame, a flexion movement, extension of the tibiotarsal articulation along its transverse axis, exerting a pressure massage due to the body weight standing upright on the foot plant, at vascular vesicles level, obtaining a venous return increase.

### Field of application

Nowadays the interest of all ages people, regards gyms within which are located a plurality of essentially mechanical equipment but also of a certain level of technology, with which it is possible to realize a specific training of the various muscle groups in an isolated way.

The use of such gymnastics equipment corresponds substantially to a considerable investment by the operators of such facilities. These equipment are in turn made and commercialized by some firms on an international level, which monopolize the sector, at damage of innovative solutions besides that functional and low-cost that could represent a valid alternative.

It is becoming consistent the recourse to solutions in the industry, ingenious but, sometimes natural and economic, which have the aim of using natural principles.

Common knowledge is in fact the explanation of such sports gymnastic exercises or rehabilitative and physiotherapeutic for example, performed bare-foot, in a substantially natural way, such as on the sand of the sea, whether near or far from the foreshore, thus achieving in such natural way, the aim to strengthen, re-educate, and rebalance the human muscular-tendon system by way of a contact means that permits to the gymnast feet and the patient in rehabilitation, a continuous sense of resting on a surface substantially comfortable, moved and enveloping that permits an instability during dynamic orthostatism and also static, that is standstill on the spot. This happens for example in the case of sports activities such as volleyball on the beach, some martial arts or of re-education and rebalancing activities of the body such as the Tai Chi, or of indoor gymnastics activities like aerobic step that can bring even greater benefits to the body, when carried out precisely, outdoor especially barefooted.

What in the previous paragraph is justified by the fact that the movement of a human foot, without shoes, thus naked, on a surface of fine sand of the marine type, wet and not, favors an irregular movement of the same, due to the continuing instability of the said marine sandy surface, which consequently determines a better flexibility, and a better coordination of the individual movements for the maintenance of the balance same, compared to the same movements performed on a hard surface type as for example the pavement of a gym or of a dwelling, where the foot is protected by appropriate footwear for such gymnastics and rehabilitation use.

Known is more so that, said motion on the sea sandy surface, improves blood circulation in the lower limbs because it permit to the feet, stranded straddled across the compact irregular sandy surface formed by the see waves, a flexed movement, extension of the tibiotarsal joint along its transversal axis, that produce a pressure massage due to the body weight in upright position on the foot plant, at the vascular vesicles area, achieving an increase in venous return and, therefore strengthens them, together with the stability of the joints and muscle-tendon elasticity.

Common knowledge is also that, thanks to a continuous movement of an individual on the sea sand, since the energy absorption typical of the same, there is an increase in energy expenditure, thus of calories of the individual, compared to a heart rate appreciably higher but, to the advantage of a substantially less stress on the joints involved, in the movement of the individual, given the accommodating nature of the sea sand.

Common knowledge finally is the realization of a variety of gymnastics equipment designed for this purpose, such as commercial mats having soft artificial surfaces also of the type with viscoelastic memory effect, both for the use of the gym exerciser that of private individuals.

So what we can say is that it is certainly known that the gymnastic movement, be it sports, rehabilitation, rehabilitation and physiotherapy carried out without the aid of footwear, namely barefooted on the sand of the sea or on an artificial surface soft and similarly accommodating , having density of support and return variables, is highly advantageous and beneficial to the human body and also to that of the animals.

### State of the art

In the field of gymnastic equipment and/or for the physical rehabilitation, by means of mats and/or steps made by composite materials a search has been carried out, which has allowed to identify at least the following prior art documents:
D1 ITTV20100140 SCIAN DANIELA [IT]
D2 GB2388052 (A) OSCROFT MAX [GB]
D3 US2007275827 (A1) GLASER WILLIAM [US]
D4 DE3440771 (A1) REINFRANK VOLKER [DE]
D5 US2008229501 (A1) HUTCHISON GAIL J [US]
D6 DE3600057 (A1) REINFRANK VOLKER [DE]
D7 US2006162073 (A1) NICHOLS SUSAN [US]
D8 US2004250346 (A1) VASISHTH VISHAL [US]
D9 US2004088789 (A1) MITCHELL JAMES A [US]
D10 US2010267532 (A1) NEWBURGER AMY [US]
D11 XP 002655313 [IT]

D1 Relates to a gymnastic tool and for the physical rehabilitation - re-education, apt to perform appropriate treatment in order to strengthen and/or re-structure the muscle - tendon structure in the human body. The tool is constituted by at least a mat and at least one step removable and repositionable firmly on the mat. Both the mat and the step are of the type consisting of composite materials in which at least one layer is a gel, viscoelastic or memory.

D2 An exercise mat is provided having first 4 and second 6 surfaces on which exercise can be performed. The material forming the first and second surfaces has different levels of resistance to impact, thereby allowing different levels or types of exercise to be performed on each of the surfaces. The mat may be provided with cover layers 8&10, such as non-slip surfaces. Intermediate layers may be provided between the first and second surfaces 4 & 6.

D3 Are presented improvements on mats for practicing yoga are presented. The mats typically provide improved balance, stability, relief of joint and knee pain, and/or improved grip, among other advantages. One particular mat has an upper surface with protrusions, such as knobs, to provide a feeling of acupressure massage to the user. The mat may be continuous and rolled up for storage, or may be divided into sections and folded. A layer of foam may be provided for cushioning, and the foam may optionally be a memory foam. Alternative embodiments include a mat without the protrusions on the upper surface, a mat with cushioning that has an undulating or otherwise irregular surface, and a mat that has no central foam but which is made of a single material.

D4 The present invention comprises a gymnastics mat which has the fleece part of a touch-and-close closure arranged at the edge of at least one flat side. The flat sides have corner pieces made of the same material. The invention comprises furthermore a new structure of the mat itself, one flat side of the mat being formed by a needled felt web, a core of foamed high pressure polyethylene is arranged below this and polyether foam below that. A mat of this kind serves as a mattress or as a landing mat, depending on which side is uppermost.

D5 Provided is a mat supplemental to an exercise mat including a cushion portion for assisting in execution and/or maintaining of a select body position (e.g., a stretch, yoga pose, or Pilates pose). The supplemental mat may include a strap detachable from the cushion portion. The strap may further assist in the execution and/or maintaining of a select body position (e.g., a stretch, yoga pose, or Pilates pose). The strap may further serve to secure the cushion portion to the traditional exercise mat, thereby causing the supplemental mat to also serve as a carrier for the traditional exercise mat.

D6 The present invention relates to exercise mats. The present invention aims to improve the aforementioned object, i.e. an improvement of connectivity between two mats to increase security for the Turner. The present invention has therefore continued the task of being able to combine these mats secure and separated from one another arrangement over the other. The solution of these tasks according to the invention, consisting preferably of a construction made of foam plastic, with a coated core and upper peripheral edges of loop tape, which is characterized by at least on an upper longitudinal edge and at least on an upper narrow edge inseparably attached adhesive tape. The adhesive tape fixed to the upper edges of the mat are connected, preferably sewn.

D7 A towel ( 10 ) includes a base layer ( 12 ) and a plurality of raised projections ( 14 ) that project away from the base layer ( 12 ). The base layer ( 12 ) has a first side ( 16 ) and a second side ( 18 ). In one embodiment, the projections ( 14 ) are discontinuously positioned and are each separately secured to one or both of the sides ( 16, 18 ) of the base layer ( 12 ). In one embodiment, the projections ( 14 ) have a higher coefficient of static friction than the base layer ( 12 ) relative to a surface ( 20 ). The base layer ( 12 ) can be formed from an absorbent material and the projections ( 14 ) can be formed from a relatively non-absorbent material. In one embodiment, the projections ( 14 ) cover less than approximately 50 percent of one of the sides ( 16, 18 ) of the base layer ( 12 ). Moreover, in one embodiment, the projections ( 14 ) can be substantially hemispherical in shape.

D8 An anti-slip, multi-layer exercise mat is provided having an upper fabric layer, a lower pliable foam layer, and an intermediate adhesive such that during use the mat provides the athlete with safety and comfort and during transport or storage the rolled mat provides convenience.

D9 A multi-purpose mat has open and folded configurations. The mat includes a base and a plurality of sidewalls disposed about a periphery of the base. A first resilient flexible slat is disposed within one of the sidewalls and a second resilient flexible slat is disposed within the remaining sidewalls. The slats provide means for reinforcing the sidewalls and also provide a spring-like effect that allows the mat to automatically rollout into the open configuration from the folded configuration. The sidewalls fold about the periphery of the base; the sidewalls moving from a position generally adjacent to the base to a position generally perpendicular to and extending generally upwardly from the base when the mat is moved from the folded configuration to the open configuration.

D10 An exercise system preferably having a mat dimensioned to support a user stretched out on the floor. The mat has a central fastening band disposed widthwise across the mat. A belt fits around the midsection of the user adapted to be aligned with and at least partially adhere to the fastening band of the mat. The user is intended to perform certain flexibility exercises with the belt in contact with the fastening band. If the user lifts her midsection off of the mat during such exercises, the removal of the belt makes an audible noise (and the mat tugs on the user) to cue the user to reposition her body flat on the mat. The fastening band preferably includes one half of a hook-and-loop-type fastener and the belt comprises the other mating half. Alternatively, one or both of the band and belt may be provided with an adhesive material.

D11 THE POWERMAT [US].

Ultimately is reasonable to considered known:
a) A material named gel, memory or viscoelastic, known also as "slow memory". The viscoelastic has a cellular structure able to combine a superior ability to mold to the body shape combined with the normal properties of the polyurethane to return to its original shape. The Viscoelastic was developed in the 60s by NASA to absorb the effects of the "G-force" to which they were subjected astronauts during launch and re-entry operations from space travel;
b) A gymnastic mat made by multilayer material in which at least one is a gel, or viscoelastic memory with at least one step removable and repositionable firmly on the mat. Both the mat and the step are of the type consisting of composite materials in which at least one layer is a gel, viscoelastic or memory;
c) An exercise mat having first and second surfaces on which exercise can be performed. The material forming the first and second surfaces has different levels of resistance to impact, thereby allowing different levels or types of exercise to be performed on each of the surfaces. The mat may be provided with cover layers, such as non-slip surfaces. Intermediate layers may be provided between the first and second surfaces;
d) One particular mat that has an upper surface with protrusions, such as knobs, to provide a feeling of acupressure massage to the user. The mat may be continuous and rolled up for storage, or may be divided into sections and folded. A layer of foam may be provided for cushioning, and the foam may optionally be a memory foam. Alternative embodiments include a mat without the protrusions on the upper surface, a mat with cushioning that has an undulating or otherwise irregular surface, and a mat that has no central foam but which is made of a single material;
e) A mat for gymnastics made of multilayer material in which at least one is a gel, memory or viscoelastic, which has a safety device to limit the release of the same from fitness facilities;
f) A towel that includes a base layer and a plurality of raised projections that project away from the base layer. The base layer has a first side and a second side. In one embodiment, the projections are discontinuously positioned and are each separately secured to one or both of the sides of the base layer. In one embodiment, the projections have a higher coefficient of static friction than the base layer relative to a surface. The base layer can be formed from an absorbent material and the projections can be formed from a relatively non-absorbent material. In one embodiment, the projections cover less than approximately 50 percent of one of the sides of the base layer. Moreover, in one embodiment, the projections can be substantially hemispherical in shape;
g) A mat for gymnastics made of multilayer material in which at least one is a gel, viscoelastic or memory, which may include a skirt to engage the sides of a bench aerobic step on which the mat was fixed;
h) A step constituted of a panel of viscoelastic gel or memory for the exercise, in which in the upper part some protrusions are formed for a double massaging effect and in the lower part are installed a plurality of shock absorbers to absorb shocks;
i) A mat for the protection of the foot and the human body while walking or standing. The mat is made from a glued, with multi-layer construction with a moisture absorbent layer, an intermediate layer of elastic foam which molds to the particular contour of the foot of the person and of its irregularities, and a bottom layer of damping of soft natural rubber latex which is elastic and has a memory.

### Drawbacks

From all the inventions and from what of public domain, it's shown that although it has been used also the viscoelastic material known for decades as a memory, in the surfaces or soft mats for gymnastics use, it has been completely neglected in the first instance the thickness of the said memory material in function of the load placed on it, which in our case the human body, which, in addition to its own weight, has different resting surfaces, such as the surfaces of the foot and the plantar arch conformations that, for equal body sizes, may vary considerably from individual to individual.

Still, about what has been shown in the previous section, a well-known American supplier of soft mats in viscoelastic or memory, commonly referred to as PowerMat, which can be observed on the web site http://www.thepowermat.com/, is irrefutable evidence of a use of a minimum thickness of memory in such a mat that, is constant in all its embodiments and measures and, for all the body weights to support. In this case the mat is only constituted by a layer of viscoelastic or memory response which force or shock absorption is therefore highly variable depending on the underlying surface, since the properties of the memory material will cease in the total compression phase of the same and, therefore, it will have a surface next to the rigidity of the underlying one, on which the one of memory rests. This effect is unavoidable as such, in the case of the PowerMat, if the applied weight approaches or is greater than the density of the viscoelastic material or memory, the same will inevitably be compressed to the limit so to approximate the underlying surface making null the benefits of the same viscoelastic or memory.

This fundamental limitation of the use of memory, i.e., whether a proper sizing of the thickness of the viscoelastic material that the failure of matching the same to materials of complementary surface coverage and lower support or, the combination of memory to materials of surface coverage and lower support non complementary is observed in all the prior art, including what is already in the public domain but not covered by patent.

Another fundamental lack noticed in these mats, matting and pillows that make use of the viscoelastic material or memory is the loose coupling or so-called by slipcover of the material of the protective coating which is therefore not glued and pressed by rolling perfectly to body on the memory, for example through a layer of vinyl stretch both in warp and weft, i.e. in such a way that it can deform in all directions, making it so body having unique deformation. This gap becomes evident if we observe for example a common orthopedic pillow commonly used for sessions of patients suffering from pathologies of the pelvis and spine, where the surface of the viscoelastic or memory is not glued to the same memory, thus forming large areas of air bubbles which create a significant surface inhomogeneity and of contact the same pillow made of memory, thus diminishing the properties of such material.

What mentioned in the previous paragraph is therefore a very important lack of the invention such as the PowerMat that, given the absence of a surface coverage of the viscoelastic material or memory, which is particularly perishable in the absence of such surface coating, which, however, must have very similar characteristics to the viscoelastic employed to follow the softness, the deformations from the load and the memory effect so accurately faithful, in such a way as to be essentially glued and sanitizable, not compromising at the same time the physical dynamics of the viscoelastic material or memory itself.

Regarding instead a combined specifically studied of a mat consisting of at least a tray delimited by a perimetric frame of closed cell polyethylene of density 180 of LD29 type, containing at least one layer of viscoelastic or memory, glued to various underlying layers of cross-linked closed cell polyethylene and polyurethanes glued together, always contained inside of the such tray, and at least one step removable and repositionable firmly on the mat, and at least one insert also removable and repositionable firmly inside the mat, always made of cross-linked closed cell polyethylene and polyurethanes glued together and covered by a layer of memory, all coated with a layer of soft vinyl elasticized both in warp and weft, in such a way that it can deform in all directions, are not found realizations in both fields of prior art patents or in the public domain.

Important is to mention for what at the previous paragraph that in no invention, be it a patent that of public domain, it's highlighted a solution to fix firmly but, in a repositionable and removable manner one or more steps cross-linked closed cell polyethylene and polyurethanes glued together, on the surface of a mat or matting for gymnastics and physical rehabilitation, and inserts of cross-linked closed cell polyethylene and polyurethanes glued together with various densities, into a mat or matting for gymnastics and physical rehabilitation, made with several layers of composite type materials cross-linked closed cell polyethylene and polyurethanes glued together, with at least a top layer of viscoelastic or memory.

From the inventions and from what of public domain is furthermore evident that the common reason of the use of a surface made of viscoelastic material or memory has been essentially the convenience of such material for the user during the gymnastic movements and reduction of mechanical shock underwent during such, while instead has been ignored the study of the thickness of the said memory material and of the support base of such, in order to improve the posture of the individual during the course of such exercises and to encourage a greater caloric expenditure, similarly to what obtained from similar movements carried out on the fine sand of the sea and relative foreshore, to allow also an instability in static orthostatism and not only dynamic, unlike the invention in D1 that, allows in fact only a dynamic instability, as during the static one, once compressed the layer of memory from the foot, there is no longer instability but equilibrium, a phenomenon due to the lower layers support of the memory, made with materials not suitable. The induction of an additional static instability also causes a greater caloric expenditure to what already disclosed in D1.

From all the above, there is a need for companies, particularly in the sector, to identify alternative solutions, more effective, compared to the solutions up to now in existence. One purpose of the present invention is also to obviate the described drawbacks.

### Brief description of the invention

This and other purposes are achieved with the present invention according to the characteristics of the included claims solving the problems outlined above by developing a mat with perimetric tray structure of containment of composite materials for gymnastics and physical rehabilitation and re-educational, apt to perform an appropriate treatment in order to strengthen and rehabilitate the muscle and the tendon structure of the human body, through the coupling of at least a mat consists of a tray delimited by a perimetric frame of high-density polyethylene, containing at least a layer of viscoelastic or memory, glued on the underlying layers of polyethylene and polyurethane glued together, and contained always in the inside of such tray mat, and at least one step removable and repositionable firmly on the mat, and at least one insert, also removable and repositionable firmly inside the mat. Said constituted mat is made with such composites materials, in such a way that reproduce and even improve, in a faithful and substantial manner the sand surface, even when wet, of the sea beach, in all its conformations surfaces. It has been developed therefore a mat made from composite materials of which at least one is composed of viscoelastic or memory material, which are glued together by means of appropriate glue compatible with those materials and distributed via a squeegee so as to uniformly combine the different materials or layers, also containing rigid parts such as Teflon, which constitute the composite mat for rehabilitation through plantar massage. These design principles have also been employed for the step and for the insert. Although the mat, the step and the insert have in common such stratified construction and part of the materials, the density of the layers of materials that are shared parts, vary as they are used for the mat, for the step and for the insert and, substantially, in relation to the individual body weight, in such way as to be useful both to the adults and to the children.

### Purposes

In this way, through the considerable creative contribution whose effect has allowed to achieve a considerable technical progress, are achieved some purposes and advantages. In particular because of circumstances has been designed and obtained by means of the said mat, to allow individuals of weights and plantar surfaces of different distribution and conformation, to obtain the same effects and benefits from the present invention.

A first fundamental purpose of the present invention is the realization of at least one mat with perimetric tray structure of containment of composite materials, for gymnastics and physical rehabilitation and re-education, apt to perform an appropriate treatment for the purpose of strengthen and re-educate the muscle and tendon structure of the human body, with at least one step and at least one insert removable, wherein at least one layer is of viscoelastic or memory material, made from composite materials and having different density and conformations, in such a way as to allows an instability in dynamic orthostatic but, also static, i.e., when still in place.

A second purpose of the present invention was the use of at least a first layer of viscoelastic or memory with density D.50 of about 2-3 cm in thickness, below which is bonded an elastic layer of a polyurethane open cells foam having a density D.75 of about 2 to 2.8 cm thick, beneath which is glued to a base of PR or cross-linked closed cell polyethylene EVA added with a density D.50, which supports a perimetric frame of closed cell polyethylene type LD29 density D.180, about 5 cm in width and about 3.5 cm thick. The combination and order of assembly of the layers constituting said tray mat for gymnastics and physical rehabilitation and re-education, allow that, when you are in a vertical position, i.e. standing over the mat, and, the foot is lifted slightly, the surface of the mat accompanies the plantar surface, thanks to the elastic recoil of the layer of open-cell polyurethane with density D.75 even if the viscoelastic or memory of D.50 takes more time to recover from the crushing exerted by the foot of the subject. The foot at plantar level always feels the contact with the surface, such as a feeling of filling of the plantar arch that is perceived more in the movement of flexion-extension of the foot or that is a tilting movement of the feet on the mat. This feature of the present invention, allows a true micro-massage at plantar level, exercised from the surface, thanks to the inner layers with elastic recoil made from the open-cell polyurethane D.75 and from the PR or cross-linked closed cell polyethylene D.50 provided as the deeper layer or the base of the said mat.

A third purpose of the present invention of said tray mat for gymnastics and physical rehabilitation and re-educational, was the assembly of the said layers of elastic polyurethane foam having a density D.75 of about 2-3 cm thick and PR or cross-linked closed cell polyethylene, EVA added with density D.50, which can also be constructed via a lamellar stratification of the said individual layers, superimposed and joined in sandwich, obtained by bonding of multiple thin layers of the material of each layer, to obtain the said individual layer desired thicknesses, in order to avoid a deformation over time of the said layers, caused by the load of the gymnastic and rehabilitation work performed on the same.

A fourth purpose of the present invention was the use of a surface coating material of the said mat, step and insert through a layer of soft vinyl, elasticized in both warp and weft glued by squeegee and pressed by rolling to the underlying layer of viscoelastic or memory and that, being able to stretch in any direction of stretching, faithfully follows the plastic deformation of the said layer of viscoelastic or memory material.

A fifth purpose of the present invention is the surface of the said mat with perimetric tray structure of containment of composite materials that, it does not show as entirely flat as in other mats (eg. judo) as it is wanted to highlight said perimetric frame, which has the aim to facilitate the stretching of the posterior muscles of the legs and to facilitate the squeezing of the arch of the foot, while maintaining the inner layers of the tray slightly higher compared to the entire perimetric frame, giving the visual effect of large plates which, joined, can pave a gymnastic hall, through mats of the present invention, also having different conformations of rigidity and walking surfaces and, thus allowing to work on a kind of axis of equilibrium that, it would become formed by the joining of the side frames, placing the said mats adherent and jointed with one another.

A sixth purpose of the present invention has been to provide the said tray mat for gymnastics and physical rehabilitation and re-educational, apt to perform an appropriate treatment in order to strengthen and rehabilitate the muscle and the tendon structure of the human body, so that it can accommodate above a thinner layer of polyurethane foam with a density D.75 surface covered with pebbles of hard material, preferably Teflon, having different diameters and heights, with spherical, hemispherical and cylindrical profiles, forming various types of waves and, covered with a thin layer of viscoelastic or memory and the overlying layer of soft vinyl or PVC elasticized in both warp and weft that it can expand in any direction, glued and pressed by rolling on the said layer of memory, such as the final surface of contact for the physical exercise of rehabilitation.

A seventh purpose of the present invention has been the application of a layer of non-slip coating on the base of the mat, steps and inserts, which layer used in the present invention is for example a PVC, used for similar coatings, glued in turn directly under the layers of internal composite materials of the mat, step and insert.

A further purpose achieved by the present invention is the realization of a method for geometric coupling between the various mats with perimetric tray structure of containment of composite materials and related steps via Velcro strips with loops and hooks, sewn or ultrasonically welded directly to the said layer of non-slip coating of the base of the mat and of the steps and inserts. Said strips of Velcro are positioned in an alternating fashion and therefore such as to make possible the joining of the various components, mats, steps and removable inserts of this invention, in any combination and flat geometrical shape and by means of the use of any solid geometrical shape usable for the purpose, through any of the surfaces and sides of the said elements.

These and other advantages will appear from the following detailed description of preferred embodiments solutions with the aid of the attached schematic drawings, whose details of execution are not to be considered limitative but only illustrative.

### Drawing and Content

- Fig. 1: is a tridimensional assembly view and in section of the present invention with two steps and related Velcro fasteners systems;
- Fig. 2: is a tridimensional assembly view and in section of the present invention with a removable insert and a step and related Velcro fasteners systems;
- Fig. 3: is a view in plan and in section of the present invention that incorporates pebbles of hard material, preferably Teflon, having different diameters and heights, with hemispheric or lenticular profile;
- Fig. 4: is a plan view of the present invention which incorporates a wavy surface with wide and narrow brims;
- Fig. 5: is a view in plan and in section of the present invention which incorporates a surface covered with pebbles of hard material, preferably Teflon, having different diameters and heights, with hemispheric or lenticular, spherical, and cylindrical profile;
- Fig. 6: is a plan view of the present invention that incorporates some fixed inserts having different density, composition and shapes;
- Fig. 7: is a plan view of the present invention that incorporates some fixed inserts having different density, composition and shapes;
- Fig. 8: is a plan view of the present invention that incorporates some fixed inserts having different density, composition and shapes;
- Fig. 9: is a plan view of the present invention that incorporates some fixed inserts having different density, composition and shapes;
- Fig. 10: is a plan view of the present invention that incorporates some fixed inserts having different density, composition and shapes.

### Practical example of embodiment of the invention

A mat with perimetric tray structure (10) of containment of composite materials, for gymnastics and physical rehabilitation and re-educational, is of the type apt to perform an appropriate treatment in order to strengthen and rehabilitate the muscle and the tendon structure of the human body, with at least a step (100, 200) and at least one removable insert (300), wherein at least one layer of viscoelastic or memory material (90), made from composite materials and having a different density conformations, in such a way as to maintain an individual proprioception of instability in dynamic orthostatic but, also static, i.e., when still in place.

The mat with tray structure perimetric (10) is composed of at least a first layer of viscoelastic or memory material (90) with a density preferably D.50 of about 2-3 cm in thickness, beneath which is glued an elastic layer of a polyurethane foam with open cells (80) having a density preferably D.75 of approximately 2-3 cm in thickness, beneath which is glued in turn a base of PR or cross-linked closed cell polyethylene EVA added (75) with a density preferably D.50, which supports an external frame of closed cell polyethylene type LD29 (70) of a density preferably D.180, of about 5 cm in width and about 3.5 cm of thickness.

These layers constituting said mat with perimetric tray structure (10) for gymnastics and physical rehabilitation and re-educational of open-cell polyurethane foam (80) having a density preferably D.75 about 2-3 cm thick and PR or cross-linked closed cell polyethylene EVA added (75) with a density preferably D.50, can also be constructed via an individual lamellar stratification of the said materials, superimposed and joined in sandwich, obtained by gluing of multi thin layers, for obtaining the said desired individual thicknesses, in order to avoid a deformation over time of the said materials, caused by the load of the gymnastic work carried out on the same.

The combination and order of assembly of said layers constituting said mat with perimetric tray structure (10) for gymnastics and physical rehabilitation and re-educational, is arranged in such a way that, when we are in vertical position, i.e. standing over the mat (10 ) and, we slightly lift up the foot, the slightly raised surface of the surface coating (30) accompanies the plantar surface, thanks to the elastic return of the layer of polyurethane foam with open cells (80) with a density preferably D.75, even if the viscoelastic or memory (90) at a density preferably D.50 takes more time to recover from the crushing exerted by the foot of the subject.

Said combination and order of assembly of said layers constituting said perimetric tray mat (10) for gymnastics and physical rehabilitation and re-educational, makes that the foot, at plantar level, always feels the contact with the surface of the slightly raised surface coating (30 ) as a sensation of filling of the plantar arch, which is felt most in the movement of flexion or extension of the foot or which is a tilting movement of the feet on the mat (10). This feature of the present invention, allows a true micro-massage at plantar level, exercised from the surface, thanks to the inner layers by elastic return made from polyurethane foam with open cells (80) with a density preferably from D.75 and PR or cross-linked closed cell polyethylene EVA added (75) with a density preferably D.50, provided as deeper layer or base of the said mat (10).

To the above said first layer of viscoelastic or memory material (90) of said mat (10) is fixed, a coating surface material of said mat, step and insert consisting of a layer of soft vinyl or PVC, elasticized both in warp and weft (20), glued by squeegee and pressed by rolling to the underlying layer of viscoelastic or memory (90) and that, being able to stretch in any direction of stretching, faithfully follows the plastic deformation of the said layer of viscoelastic or memory material (90).

The surface of said mat with perimetric tray structure (10) of containment of composite materials, does not presents wholly flat as in other mats (eg. of the type for the practice of judo), as it has been intended to highlight the said perimetric frame of closed cell polyethylene type LD29 (70) of a density preferably D.180, which with its high density, has the aim to facilitate the stretching of the posterior muscles of the legs and to facilitate the squeezing the plantar arch.

The maintenance of the inner layers of the mat with tray structure (10), slightly higher compared to the entire perimetric frame, gives the visual effect of large plates which, joined, can pave a gymnastic hall, through the combination of mats (10) of the present invention, also having different conformations of rigidity and upper surfaces and, therefore allows to work on a kind of balance axis, that is formed by the joining of the perimetric frames of closed cell polyethylene type LD29 with density preferably D.180 (70), placing said mats (10) adherent and joined to each other.

At least one step (100, 200) but usually two or three are fixed in a secure but removable and repositionable manner to said mat (10) through four discs of Velcro (60) also of the Dual Lock type, one of which is loop and the other is hook or, for convenience, both loop or hook, of predefined diameter. Said circular or disc shape is used to allow a firm and removable position at 360 degrees, of the said step (100, 200), above the said mat (10).

At the base of said mat (10) are fixed instead and protrude strips of Velcro (50) in an alternating fashion, and away in such a manner as to form a junction with loop and hook which serves as fixing area of a mating face with the area of Velcro loop and hook, fixed and hidden under the layer of non-slip PVC or similar (40) of the mat (10) itself, to allow the joining and the detachment and relative repositioning of such mats (10) when used in combination in order to pave a gym hall.

The above-mentioned steps (100, 200) equal to the mat (10) are composed of a surface layer of coverage achieved with a layer of soft vinyl or PVC, elasticized both in warp and weft (20), which is glued to a first underlying layer of viscoelastic or memory material (90) preferably having a density D.50 but, also variable, which in turn is bonded to one or more lower layers of support composite of agglomerate elastic material of polyurethane foam with open cells (80), preferably having density D.75, but also variable. The above-mentioned steps (100, 200) are made with multilayers of such density and glued under the viscoelastic or memory (90), in order to transmit in a faithful manner the exercise movements carried out on the said steps (100, 200 ) to the mat (10) below, while maintaining the same individual plantar feeling, during the exercise itself.

The steps (100, 200) and removable inserts (300) and stationary (301-316) of the present invention can also be realized in any geometric solid shape, but always maintaining unaltered the order of the factors or materials that constitute the innovation of the present invention, in the realization of such solid geometric shapes; which will be used for special gymnastic movements and complex as required for example in gymnastics of physiotherapy and musculoskeletal rehabilitation.

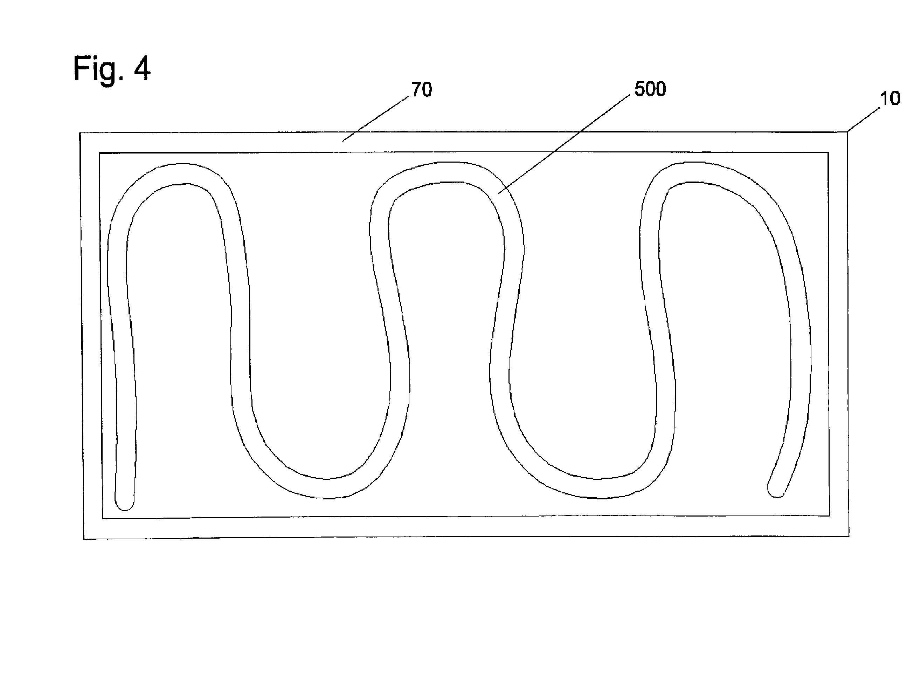

Said perimetric tray mat (10) for gymnastics and physical rehabilitation and re-education, apt to perform an appropriate treatment in order to strengthen and re-educate the muscle and tendon structure of the human body, made so that it can accommodate a layer of PR or cross-linked closed cell polyethylene EVA added (75) with a density preferably D.50, a layer of viscoelastic or memory (90) and another layer above said memory, for example of polyurethane foam with open cells (80) of a density preferably D.75, such as a wavy surface with wide and narrow brims (500) so as to reproduce the effect left by the waves of the sea when they retreat from the beach foreshore (Fig.4).

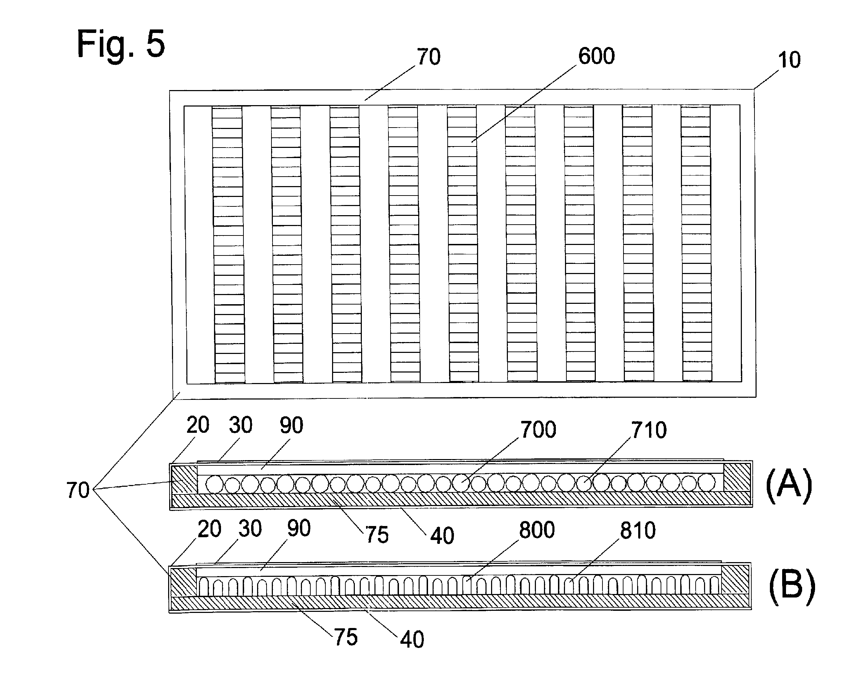

Said perimetric tray mat (10) for gymnastics and physical rehabilitation and re-education, apt to perform an appropriate treatment in order to strengthen and re-educate the muscle and tendon structure of the human body, made so that it can accommodate over a thinner layer of polyurethane foam with open cells (80) of a density preferably D.75 or above a layer of PR or cross-linked closed cell polyethylene EVA added (75) with a density preferably D.50, an area covered by pebbles of hard material, preferably Teflon, having different diameters and heights, with lenticular shape (400), hemispherical shape (600) spherical shape (700), and cylindrical shape (800), (Fig.5), forming various types of waves and, covered with a thin layer of viscoelastic or memory (90) and the overlying layer of soft vinyl or PVC and elasticized in both warp and weft (20) which can stretch in any direction, glued and pressed by rolling on the said layer of viscoelastic or memory (90), which final surface of contact for the physical rehabilitation exercise.

A layer of non-slip PVC or similar (40) is provided and fixed to the base of the mat (10), steps (100, 200) and removable inserts (300), which layer used in the present invention is for example a PVC, used for similar coatings, in turn glued directly beneath the layers of internal composite materials of the mat (10), step (100, 200) and removable inserts (300).

It is possible a method of geometrical coupling between the various said perimetric tray mat (10) of containment of composite materials and related steps (100, 200), using strips of Velcro (50) with slots and hooks, sewn or ultrasonically welded directly to the said layer of non-slip PVC or similar (40) on the base of the mat (10) and steps (100, 200) and removable inserts (300). Said strips of Velcro (50) are then positioned in such a way as to make possible the joining of the various components, mats (10), steps (100, 200) and removable inserts (300) of the present invention, in any combination and flat geometric shape and through the use of any solid geometric shape usable for the purpose, through any of the surfaces and sides of the said elements.

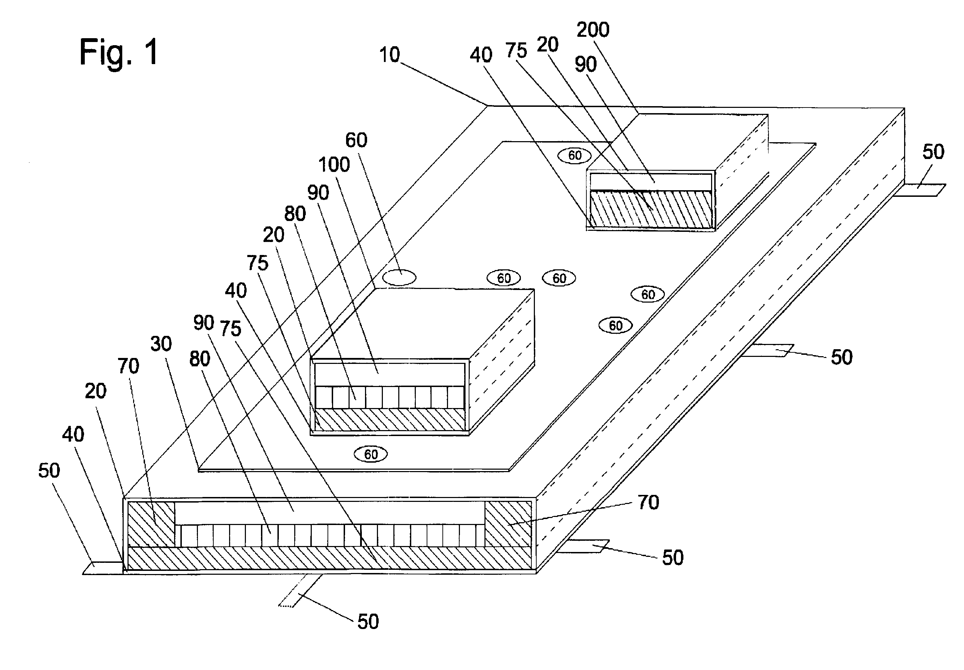

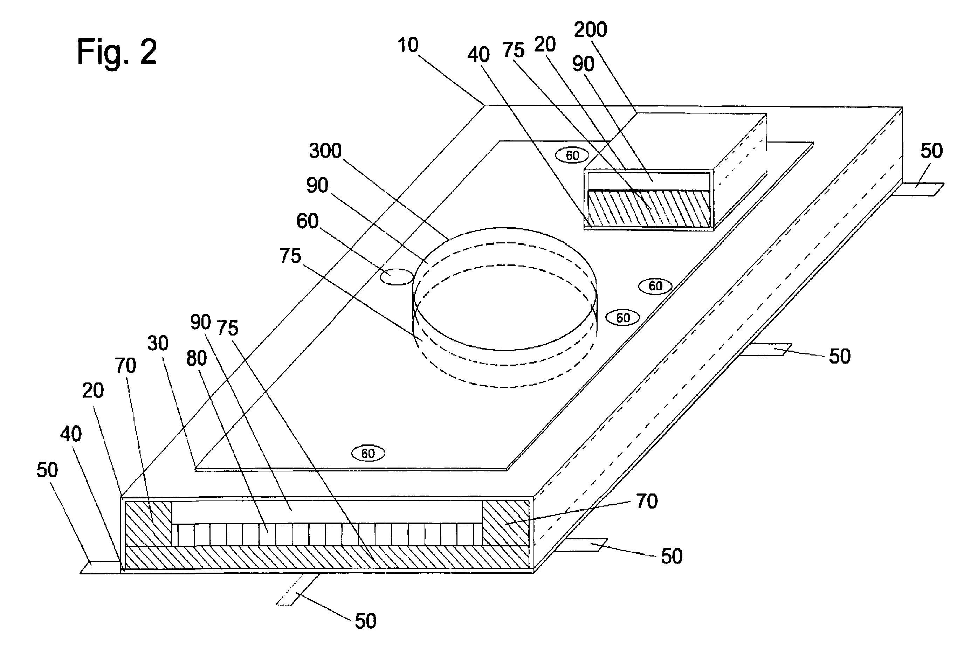

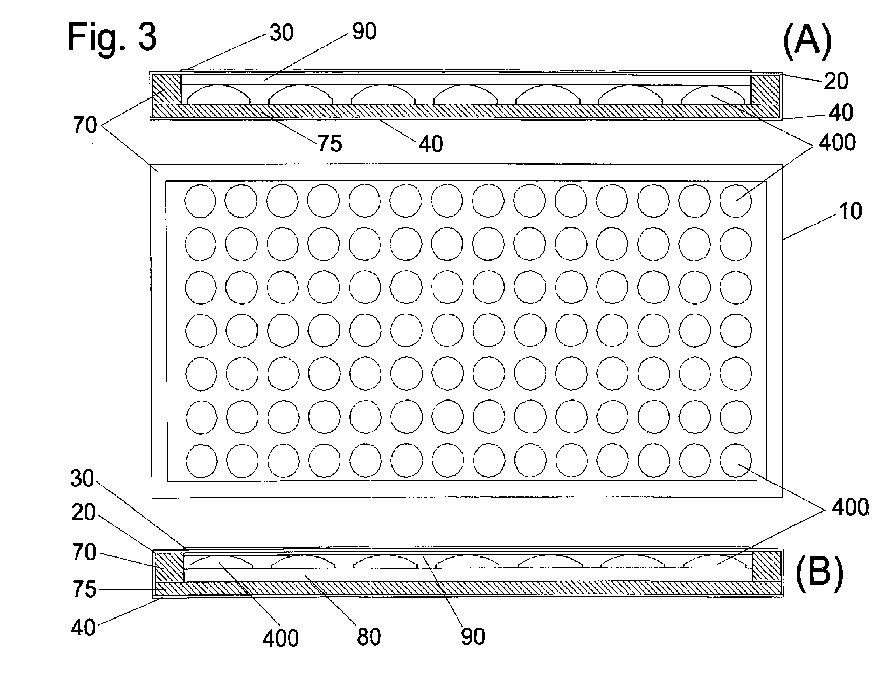

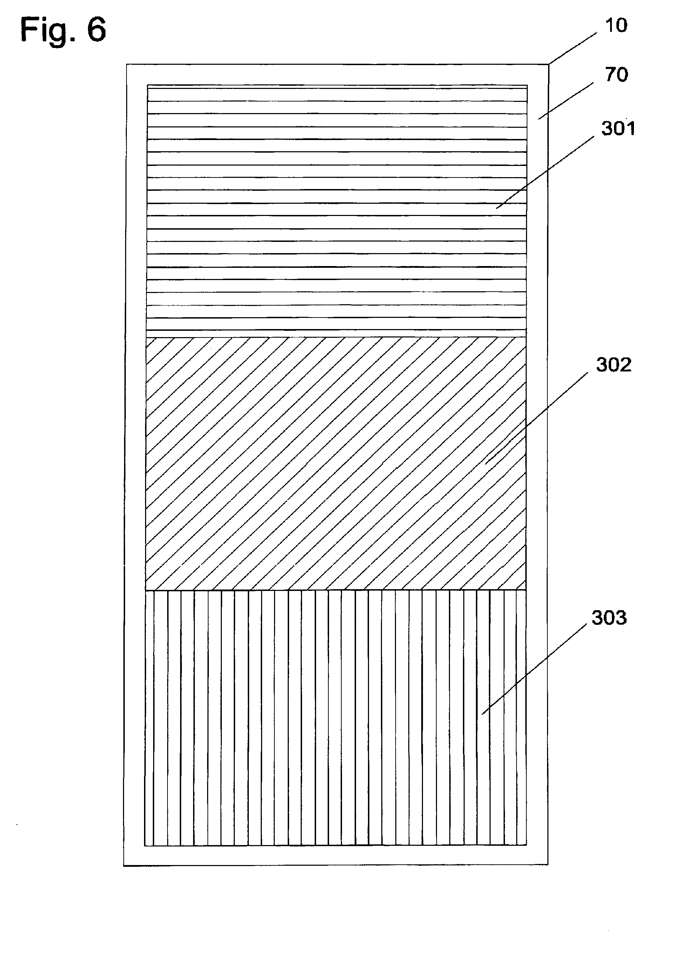

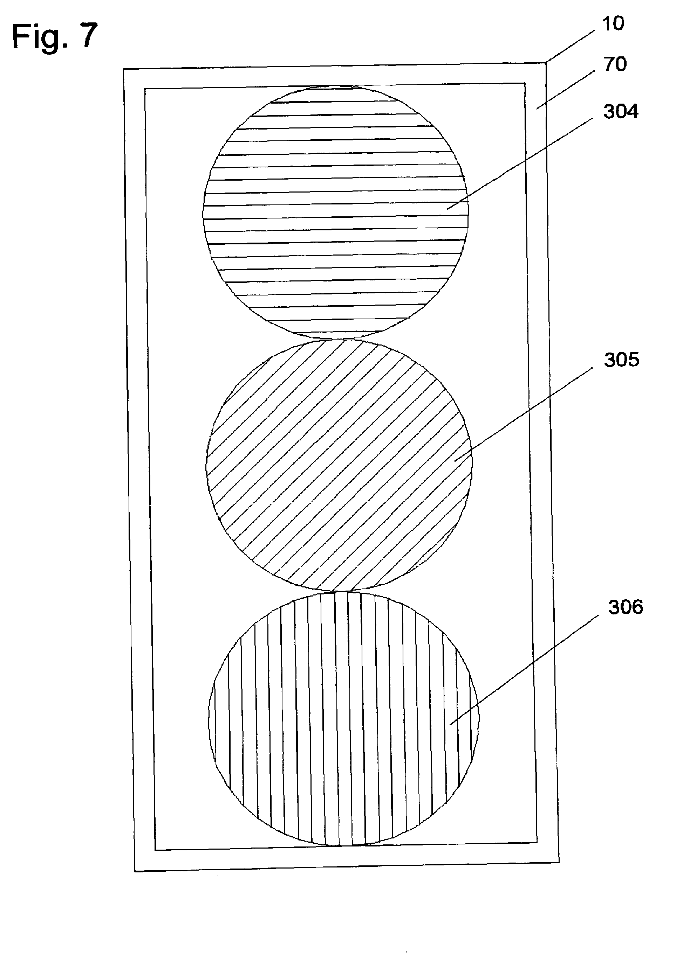

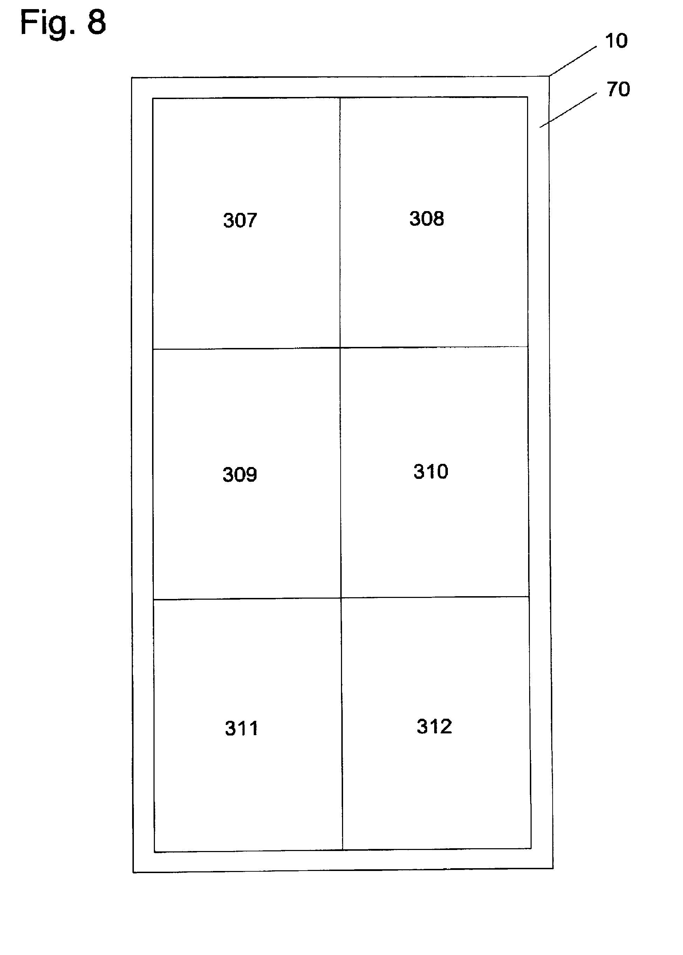

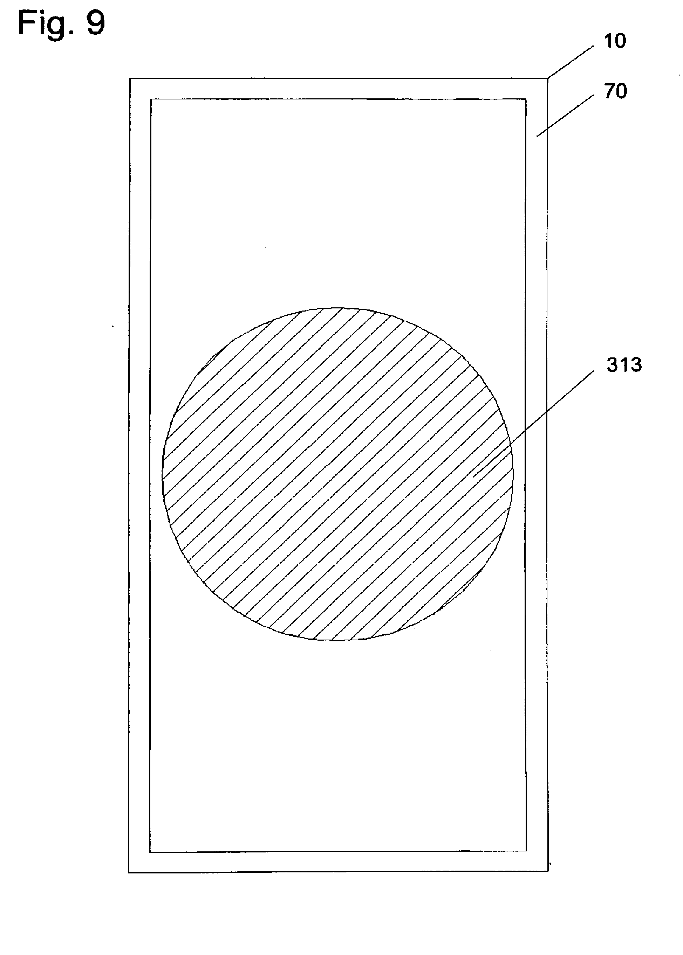

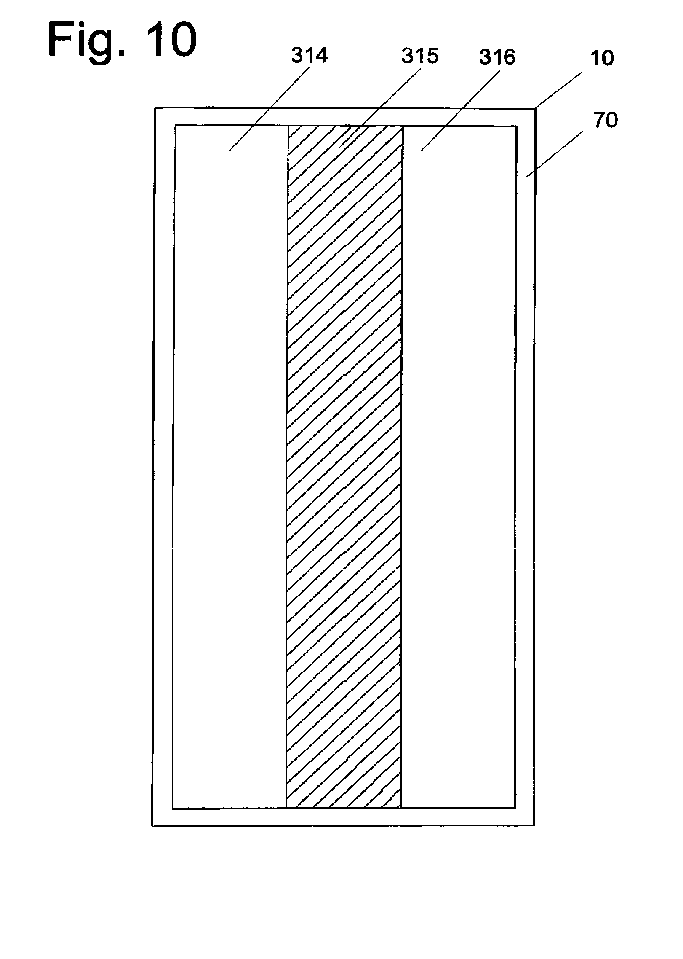

The present invention which perimetric tray mat (10) for gymnastics and physical rehabilitation and re-education, apt to perform an appropriate treatment in order to strengthen and re-educate the muscle and tendon structure of the human body, has been conceived to allow an extreme versatility of use ranging from simple aerobics to martial arts, to bodybuilding, to the re-education and rehabilitation gymnastics in a very natural manner and adaptable to various types of work and individual physiques through a multiple configuration of the tool itself, for composition and shapes of mats (10), of the steps (100, 200) placed on them and of the removable inserts (300) and stationary (301, 302, 303, 304, 305, 306, 307, 308, 309, 310, 311, 312, 313, 314, 315, 316) having different density, composition and shapes (Fig. 6, Fig 7, Fig 8, Fig 9, Fig 10). Some of the possible combinations representational but not exhaustive are represented in Fig. 1, Fig. 2, Fig. 3, Fig. 4, Fig. 5, Fig. 6, Fig. 7, Fig. 8, Fig. 9, Fig. 10.

### Legend

(10) perimetric tray mat
(20) layer of soft vinyl or PVC, which is elasticized in warp and weft
(30) slightly raised surface coating
(40) layer of non-slip PVC or similar
(50) strips of Velcro
(60) discs of Velcro
(70) frame of closed cell polyethylene type LD29
(75) layer of PR or cross-linked closed cell polyethylene EVA added
(80) layer of polyurethane foam with open cells
(90) viscoelastic or memory material
(100) step
(200) step
(300) removable insert
(301-316) fixed insert
(400) pebbles of hard material, preferably Teflon, having different diameters and heights, with lenticular shape
(500) wavy surface with wide and narrow brims
(600) pebbles of hard material, preferably Teflon, having different diameters and heights, with a lenticular shape
(700) pebbles of hard material, preferably Teflon, having different diameters and heights, with spherical shape
(710) pebbles of hard material, preferably Teflon, having different diameters and heights, with spherical shape
(800) pebbles of hard material, preferably Teflon, having different diameters and heights, with cylindrical shape
(810) pebbles of hard material, preferably Teflon, having different diameters and heights, with cylindrical shape

## Claims

1. A mat with perimetric tray structure (10) containment of composite materials, for gymnastics and physical rehabilitation and re-education, in order to strengthen and re-educate the muscle and tendon structure of the human body, **characterized in that is** equipped with at least one step (100, 200) and at least one removable insert (300) and fixed (301-316), wherein, in said mat (10), step (100, 200) and removable insert (300) and fixed (301 -316), at least a first layer is of viscoelastic or memory material (90), and at least one other middle layer, underlying and glued to the said layer of viscoelastic or memory (90) consists of an elastic layer of polyurethane open cells foam (80) beneath which is located at least a last base layer, consisting of PR or cross-linked closed cell polyethylene EVA added (75), wherein said layers are made with composite materials having densities ranging from D.35 to D.90 and having solid geometric polygonal conformations, so that said assembly of stratified composite materials allows an instability in dynamic orthostatic but, also static, i.e., when still in place.

2. A mat with perimetric tray structure (10) containment of composite materials, for gymnastics and physical rehabilitation and re-education, apt to carry out a treatment appropriate for the purpose of strengthen and re-educate the muscle and tendon structure of the human body, according to claim 1, **characterized in that** is a stratified assembly composed of at least a first layer of viscoelastic or memory (90) with density D.50 of about 2-3 cm in thickness, below which is bonded an elastic layer of a polyurethane open cells foam (80) having a density D.75 of about 2 to 2.8 cm thick, beneath which is glued to a base of PR or cross-linked closed cell polyethylene EVA added (75) with a density D.50, which supports a perimetric frame of closed cell polyethylene type LD29 (70) density D.180, about 5 cm in width and about 3.5 cm thick, which assembly so stratified allows a micro-massage at plantar level, exercised by the surface, due to the internal elastic return layers made from polyurethane with open cells (80) D.75 and from the PR or cross-linked closed cell polyethylene (75) D.50 provided as the deepest layer of the base of said mat (10).

3. A mat with perimetric tray structure (10) containment of composite materials, for gymnastics and physical rehabilitation and re-education, apt to carry out a treatment appropriate for the purpose of strengthen and re-educate the muscle and tendon structure of the human body, according to claim 2, **characterized in that**, the assembly of said individual elastic layers (80, 75) underlying the first layer of viscoelastic or memory (90) with density D.50, of polyurethane open cells foam (80) having a density D.75 of about 2-3 cm in thickness and of PR or cross-linked closed cell polyethylene EVA added (75) having a density D.50, can also be constructed through a stratified lamination of those individual elastic layers (80, 75) underlying the first layer of viscoelastic or memory (90) with density D.50, overlapped and sandwich joined, structure obtained by bonding multiple thin layers of the material constituting each layer of polyurethane open cells foam (80) and of PR or cross-linked closed cell polyethylene, EVA added (75), to obtain the said desired individual layer thicknesses, in order to avoid a deformation over time of said layers, caused by the load of the gymnastic and rehabilitation work carried out on the same.

4. A mat with perimetric tray structure (10) containment of composite materials, for gymnastics and physical rehabilitation and re-education, apt to carry out a treatment appropriate for the purpose of strengthen and re-educate the muscle and tendon structure of the human body, according to claim 1, 2 and 3, **characterized in that** employs a surface coating material of said mat, step and insert, through the use of a layer of soft vinyl or PVC, which is elasticized both in warp and weft (20), glued by squeegee and pressed by rolling to the underlying layer of viscoelastic or memory (90) with density D.50 and that, being able to stretch in any direction of stretching, faithfully follows the plastic deformation of said layer of viscoelastic material or memory (90) with density D.50.

5. A mat with perimetric tray structure (10) containment of composite materials, for gymnastics and physical rehabilitation and re-education, apt to carry out a treatment appropriate for the purpose of strengthen and re-educate the muscle and tendon structure of the human body, according to previous claims, **characterized in that** the surface of the slightly raised surface coating (30), of the layer of soft vinyl or PVC, elasticized both in warp and weft (20) of said mat (10), is not entirely flat, in such way to favor the stretching of the posterior muscles of the legs and promote the squeezing of the foot arch, keeping the inner layers of the mat with perimetric tray (10) slightly higher than the entire perimetric frame of closed cell polyethylene type LD29 (70) of density D.180, thus giving the visual effect of large plates which, joined, can pave a gym room, through mats of the present invention, also having different conformations of rigidity and walking surfaces and, allowing thus to work on a sort of balance axis which, it would be formed by the joining of said perimetric frame of closed cell polyethylene type LD29 (70) of density D.180, placing the said mats (10) adherent and joined one to another.
